**Europäisches Patentamt**

**European Patent Office**

**Office européen des brevets**

(19)

(11) Numéro de publication: **0 173 782**
**B1**

(12) # FASCICULE DE BREVET EUROPEEN

(45) Date de publication du fascicule du brevet:
**22.06.88**

(21) Numéro de dépôt: **84402687.2**

(22) Date de dépôt: **21.12.84**

(51) Int. Cl.⁴: **B 01 J 8/26,** C 10 J 3/54,
F 23 C 11/02

(54) **Procédé de traitement de matiéres.**

(30) Priorité: **23.12.83 FR 8320674**

(43) Date de publication de la demande:
**12.03.86 Bulletin 86/11**

(45) Mention de la délivrance du brevet:
**22.06.88 Bulletin 88/25**

(84) Etats contractants désignés:
**AT BE CH DE FR GB IT LI LU NL SE**

(56) Documents cités:
**EP - A - 0 027 280**
**DE - C - 919 004**
**FR - A - 2 209 074**
**FR - A - 2 286 874**

(73) Titulaire: **CREUSOT-LOIRE, 42 rue d'Anjou,**
**F-75008 Paris (FR)**

(72) Inventeur: **Morin, Jean-Xavier, 9 B rue de Nevers,**
**F-71200 Le Creusot (FR)**

(74) Mandataire: **Polus, Camille et al, c/o Cabinet**
**Lavoix 2, Place d'Estienne d'Orves, F-75441 Paris**
**Cedex 09 (FR)**

### Description

L'invention a pour objet un procédé de traitement de matières en lit fluidisé circulant avec extractions de solides et s'applique plus particulièrement à la combustion et à la gazéification de particules de charbon pour lesquelles l'extraction des cendres doit s'effectuer de façon sélective vis à vis du carbone contenu dans le réacteur.

Le traitement d'une matière combustible et notamment la gazéification du charbon est couramment réalisé en lit fluidisé dans une chambre de traitement ayant la forme d'une enceinte allongée à axe vertical, alimentée en matière combustible sous forme de particules et munie à sa base de moyens de formation d'un lit fluidisé de particules par circulation ascendante d'un gaz. Un gaz comburant est également injecté dans le lit fluidisé pour assurer la combustion et/ou la gazéification des particules. Les fumées produites par la combustion s'échappent à la partie supérieure de la chambre de réaction par une conduite d'évacuation qui débouche dans un séparateur gaz-solide permettant de récupérer les particules solides entraînées avec les fumées. Si la vitesse de fluidisation est faible, seules les particules très légères, en particulier les cendres, sont entraînées avec les fumées, le lit fluidisé fonctionnant en lit dense.

Si l'on augmente la vitesse de circulation du gaz de fluidisation, la proportion de particules entraînées augmente. On peut arriver ainsi au fonctionnement en lit circulant dans lequel la chambre de réaction comprend une zone dense qui contient les particules les plus lourdes et une zone diluée qui s'étend jusqu'à la partie supérieure de la chambre de réaction et contient une proportion importante de la matière combustible entraînée avec les cendres vers le séparateur. Ce dernier comprend une sortie des gaz épurés et une sortie des particules récupérées qui est reliée à la chambre de réaction par un circuit de recyclage permettant de renvoyer dans la chambre de réaction les particules récupérées. Lorsque l'on fonctionne en lit circulant, ce circuit de recyclage permet de réinjecter dans la chambre de réaction des particules combustibles entraînées avec les fumées jusqu'à épuisement total du carbone contenu.

Dans un réacteur de gazéification, la quantité de carbone susceptible de réagir est fonction de la température et de la réactivité du charbon. Cependant, la température de fonctionnement est limitée par la température de collage des cendres dont l'extraction est indispensable pour ne pas engorger le lit fluidisé.

Si la réactivité du charbon est élevée, les matières en recyclage sont principalement constituées de cendres et non de carbone, ce qui permet l'extraction des cendres du réacteur sans perte intolérable de carbone pour l'économie du procédé. Ce n'est pas le cas, en revanche, lorsque la réactivité du charbon est faible, les matières en recyclage étant alors principalement constituées de carbone.

Du point de vue de l'extraction des cendres, on connaît deux modes de fonctionnement du réacteur.

Dans le procédé dit «en cendres sèches» appliqué aux charbons réactifs la température dans le lit fluidisé est limitée à un niveau inférieur à la température de collage des cendres. Dans ce cas, il est préférable de fonctionner en lit circulant de façon à faire recirculer les imbrûlés entraînés avec les fumées jusqu'à épuisement complet du carbone. L'extraction des cendres sèches de la chambre de réaction peut se faire par des moyens connus.

Dans un autre procédé dit «en cendres agglomérées», appliqué aux charbons peu réactifs, on ménage à l'intérieur du lit fluidisé une zone localisée à haute température de façon à provoquer l'agglomération sélective des cendres, connu sous le nom d'effet «Godel», qui a pour effet d'agglomérer les particules de cendres sans emprisonner de carbone. Les particules agglomérées, après avoir atteint une certaine taille, tombent à contre-courant d'un flux gazeux ascendant, dans un réceptacle situé à la base d'un réacteur cylindrique prévu à cet effet. Un tel dispositif pose des problèmes d'extrapolation à des réacteurs de grands diamètres car, l'agglomération et l'extraction des cendres ayant lieu dans la zone centrale du corps du réacteur, il est difficile de réaliser sur toute la section transversale de la chambre la répartition des températures nécessaire au bon fonctionnement de l'installation.

Par ailleurs, dans les lits fluidisés avec agglomération, la vitesse de fluidisation doit être inférieure à 2 m/s pour ne pas détruire l'effet GODEL en question ce qui interdit un fonctionnement en lit circulant impliquant des vitesses de fluidisation pouvant aller jusqu'à 15 m/s par exemple, alors que les réacteurs de ce dernier type sont plus performants et plus compacts.

On connaît dans le DE-C-919 006, une installation de traitement de matières combustibles dans un lit fluidisé comprenant une chambre secondaire de réaction interposée dans un circuit de recyclage dans le lit fluidisé des particules solides récupérées et munie de moyens de formation d'une zone à haute température et de moyens d'évacuation séparés des particules agglomérées vers l'extérieur de l'installation.

On connaît également dans le EP-A-27 280 une installation de traitement dans laquelle la partie inférieure d'une enceinte se rétrécit en forme de trémie pour se raccorder à un circuit d'alimentation d'un courant ascendant de gaz de fluidation par une partie reserrée au centre de laquelle passe une lance verticale d'injection d'un gaz comburant débouchant à l'intérieur du lit fluidisé. L'ensemble forme un col de section annulaire pour le passage à contre courant vers le haut du gaz de fluidisation et vers le bas des centres agglomérés tombant du lit fluidisé.

L'invention a pour objet un procédé de traitement de matières en lit fluidisé avec extraction de produits solides, dans une installation comportant une chambre principale de traitement, alimitée en matière à traiter, munie à sa base de moyens de formation, par circulation ascendante d'un gaz, d'un lit fluidisé dans lequel on réalise une réaction de traitement avec production de particules solides susceptibles de s'agglomérer à partir d'une température de collage, et reliée pas sa partie supérieure à un séparateur gaz-solides de récupération des particules fines entraînées avec les gaz et comprenant au moins une partie agglomérable, le séparateur comprenant une sortie des gaz épurés et une sortie des solides, reliée à la chambre principale de traitement par un circuit de recyclage dans le lit fluidisé des particules récupérées, lesdites particules fines récupérées à la sortie du séparateur étant introduites dans une zone localisée ménagée sur le trajet du circuit de recyclage et dans laquelle on produit une haute température, supérieure à la température de collage, permettant l'extraction des particules agglomérables, et les particules incomplètement traitées étant seules recyclées dans le lit fluidisé, caractérisé par le fait que l'on règle la température dans la chambre principale de traitement à un niveau inférieur à la température de collage des produits.

De façon particulièrement avantageuse, on règle les conditions de fonctionnement et de circulation des gaz dans la chambre principale de traitement pour y obtenir un régime de lit fluidisé circulant dans lesquels les produits solides formés se séparent en deux parties, une partie fine entraînée avec les gaz et susceptible d'être extraite après agglomération dans la zone à haute température et une partie grossière restant dans le lit fluidisé et évacuée par gravité à la base de la chambre principale.

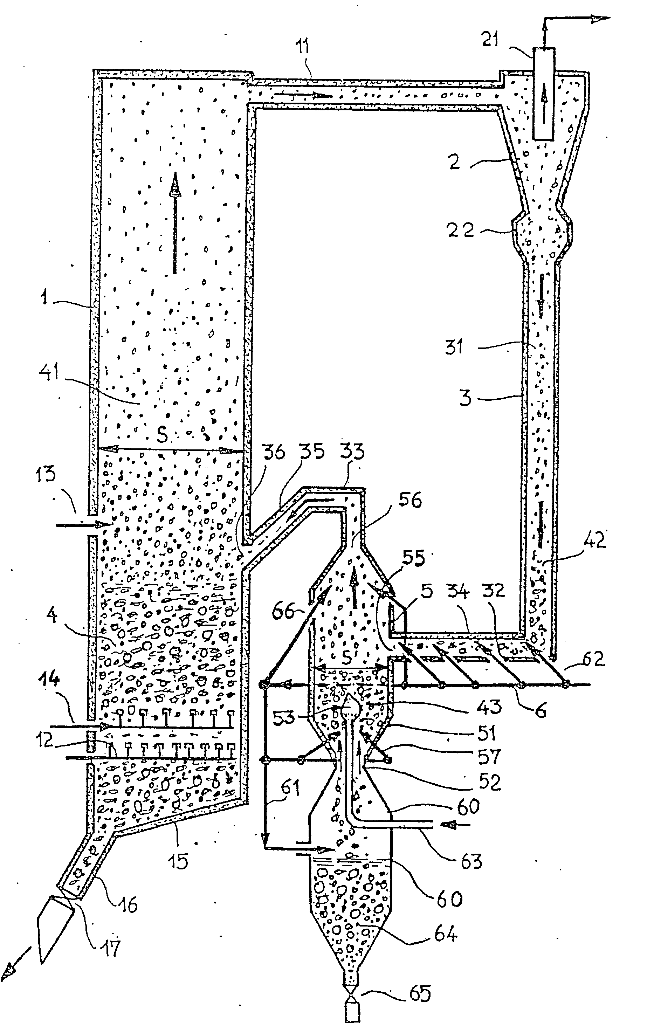

Mais l'invention sera mieux comprise par la description suivante d'un mode de réalisation particulier donné à titre d'exemple et représenté schématiquement sur la figure annexée.

L'installation représentée sur la figure comprend, de façon classique, une chambre principale de traitement 1 dont la partie supérieure est reliée par une conduite d'évacuation 11 à un séparateur gaz-solides 2 comprenant une sortie 21 des gaz épurés et une sortie inférieure 22 des particules récupérées qui débouche dans un circuit 3 de recyclage à l'intérieur de la chambre 1 des particules récupérées dans le séparateur.

La chambre principale de traitement 1 est constituée par une enceinte allongée à axe vertical munie à sa base de moyens de formation d'un lit fluidisé tels qu'une rampe 12 d'injection d'un gaz de fluidisation réparti de façon homogène sur toute la section transversale de la chambre 1. La matière combustible, par exemple du charbon, se présentant sous forme de particules, est introduite par un orifice d'alimentation 13 et tombe dans la partie inférieure de la chambre 1 où elle forme un lit fluidisé 4. Un agent réactant tel que de l'oxygène ou un autre gaz comburant est introduit par une rampe 14 débouchant à l'intérieur du lit fluidisé 4 en plusieurs endroits de façon à assurer une température homogène dans le lit. Selon le débit des gaz, on peut faire varier la vitesse de circulation ascendante et par conséquent la proportion de particules entraînées vers le haut avec les fumées et évacuées par la conduite 11. Dans un fonctionnement en lit circulant, on distingue une zone dense 4 du lit fluidisé, où se trouvent les particules les plus grosses, et une zone diluée 41 contenant une quantité importante de particules entraînées constituées de cendres et d'imbrûlés.

Les plus grosses particules de charbon tombent donc à l'intérieur du lit fluidisé où elles sont maintenues en suspension jusqu'à un degré de combustion permettant aux particules les plus fines d'être entraînées par les gaz avec les cendres. La zone du réacteur à proximité de la grille de fluidisation 12 joue le rôle de zone de décantation pour les grosses particules qui, après avoir épuisé leur contenu en carbone, se rassemblent dans la partie inférieure de la chambre 1 dont le fond 15 en forme de trémie se raccorde à une conduite d'évacuation 16 munie d'un dispositif d'obturation 17.

Les particules plus fines, constituées de cendres et d'imbrûlés sont entraînées avec les fumées par la conduite d'évacuation 11 vers le séparateur 2 où elles sont récupérées et évacuées par la sortie 22 vers le circuit de recyclage 3. Ce dernier comprend une branche verticale 31 formant la conduite de sortie des solides du séparateur 2 et une branche inférieure 33 ayant une direction moyenne horizontale et par laquelle les particules sont réintroduites dans la chambre 1. La branche horizontale 33 est souvent coudée en forme de siphon et comprend une section inférieure 34 de reprise des particules, munie d'orifices 32 d'injection d'un agent gazeux de fluidisation, comme, par exemple, de la vapeur d'eau, du gaz carbonique ou un gaz inerte, et une section supérieure 35 en forme de U renversé, débouchant dans la chambre principale 1. En cas de besoin, pour assurer l'équilibrage des pressions, un second siphon peut être aménagé sur la section inférieure 34, en amont de la chambre secondaire.

Les particules solides récupérées dans le séparateur 2 tombent dans la conduite verticale de sortie 31 et se rassemblent à la partie inférieure de celle-ci en formant une colonne dense 42 qui assure l'étanchéité aux gaz, ces derniers étant évacués par la sortie supérieure 21 du séparateur.

Les particules solides subissent ensuite un changement de direction et passent dans la conduite de reprise 34 où elles sont partiellement fluidisées par l'agent de fluidisation injecté par les orifices 32 dans le sens de circulation vers la chambre principale de traitement 1.

Selon la caractéristique essentielle de l'invention, la branche inférieure 33 du circuit de recyclage, qui est coudée en forme de siphon, passe par une chambre secondaire de réaction 5 qui remplace la partie intermédiaire verticale du siphon et est donc interposée entre la conduite inférieure 34 de reprise des particules 42 et la conduite supérieure 35, en forme de U renversé. La chambre secondaire 5 comprend un orifice d'entrée 55 ménagé sur sa paroi latérale, au débouché de la conduite de reprise 34 et un orifice de sortie 56 placé à sa partie supérieure et sur lequel est branchée la conduite supérieure 35 qui débouche à son autre extrémité dans la chambre principale 1 par un orifice 36 placé au-dessus du niveau limite de la zone dense 4 du lit fluidisé ou bien franchement à l'intérieur de celui-ci.

Un gaz de fluidisation comme de la vapeur d'eau, est injecté en 57, à la base de la chambre secondaire 5, pour mettre en suspension les particules venant de la conduite 34 et qui forment un lit fluidisé dense 43.

Dans l'exemple représenté, la partie inférieure de la chambre 5 se rétrécit en forme de trémie 51 pour se raccorder, par une partie resserrée 52, à une seconde chambre verticale 60 dans laquelle débouche une branche 61 d'un circuit 6 d'alimentation en gaz de fluidisation qui peut être par exemple de la vapeur d'eau. Le même circuit 6 peut avantageusement alimenter les orifices 32 ménagés dans la conduite horizontale 34 du circuit de recyclage pour assurer la reprise des particules et les injecteurs 57 débouchant dans le fond 51 de la trémie 5.

Un agent réactant tel que de l'oxygène est introduit par une lance d'injection comprenant une partie verticale 63 passant dans l'axe de la partie resserrée 52 pour déboucher à l'intérieur du lit fluidisé 43. De la sorte, la partie resserrée 52 forme un col de section annulaire permettant le passage vers le lit fluidisé d'un courant ascendant de gaz introduit dans la chambre inférieure 60 par le circuit 61 et participant à la mise en fluidisation des particules. Ce débit complémentaire de gaz peut être réglé en fonction de la section transversale du col annulaire 52 et de la taille des particules de façon à permettre le passage à contre-courant vers le bas des particules de dimension supérieure à une limite choisie. Ces grosses particules sont formées des cendres agglomérées dans une zone 53 à haute température, localisée au débouché de la lance d'injection d'oxygène 63, à l'intérieur du lit fluidisé 43.

Les cendres agglomérées qui passent vers le bas par le col 52 tombent dans un bain liquide 64 ménagé à la base de la chambre inférieure 60 et d'où elles sont évacuées soit par une vanne d'extraction continue 65 soit par un dispositif de sas.

La réalisation d'une zone à haute température 53 à l'intérieur du lit fluidisé 43 et dans laquelle est provoquée l'agglomération des cendres entraîne en outre une conversion supplémentaire du carbone restant dans les particules en circulation. Les produits gazeux de réaction sont entraînés vers le haut avec les particules fines par la conduite d'évacuation 35 qui débouche dans le réacteur principal 1 en subissant un nouveau changement de direction. De préférence, la partie supérieure de la chambre secondaire sera limitée par une paroi réfractaire refroidie pour éviter les collages. L'entraînement des gaz et des particules fines peut être facilité par l'injection d'un certain débit de vapeur d'eau dans la partie supérieure de la chambre 5 par des injecteurs 66 branchés en dérivation sur le circuit 6 d'alimentation en gaz de fluidisation.

L'agglomération des cendres est ainsi réalisé dans la chambre secondaire 5 qui peut avoir une section transversale S' relativement faible, déterminée en fonction du débit de recyclage des particules fines. En revanche, on peut donner des dimensions importantes à la chambre de réaction principale 1 et par conséquent y traiter un débit important de matière combustible car la température y est plus réduite et peut être rendue homogène par une répartition de l'injection d'oxygène sur toute la section transversale S. En outre les risques de collage dans la chambre principale étant écartés, on peut fonctionner en lit circulant, ce qui facilite l'homogénéisation des températures et augmente le rendement de conversion, les temps de contact gaz-solides étant plus élevés.

Bien entendu, il serait facile de remplacer les dispositions décrites par des moyens analogues remplissant les mêmes fonctions.

En particulier, on pourrait donner une autre forme à la chambre secondaire et aux moyens d'extraction des cendres agglomérées et utiliser un dispositif de séparation gaz-solides d'un autre type.

D'autre part, l'invention s'applique spécialement à la gazéification du charbon ou d'autres combustibles mais pourrait également être utile chaque fois qu'un traitement en lit fluidisé fait apparaître des produits fins susceptibles d'être entraînés avec les gaz et de s'agglomérer de façon sélective, par collage, à une température différente de la température de traitement.

Par exemple, l'invention peut s'appliquer également au traitement de combustibles liquides ou pâteux tels que les effluents classiques de papeterie (liqueur noire). Il s'agit de produits combustibles constitués d'un mélange d'eau, de composés carbonés contenant du carbone, de l'hydrogène et de l'oxygène ainsi que des sels de Sodium, Potassium, Magnésium, Soufre, Phosphore, qui fondent à basse température (inférieure à 1000 °C). Grâce aux dispositions selon l'invention, il est possible d'assurer la combustion et/ou la gazéification de ces composés carbonés dans la chambre principale de réaction à la température voulue, tout en assurant l'extraction des sels et des inertes à l'état agglomérant ou à l'état de pellets dans le lit fluidisé à haute température aménagé sur le circuit de recyclage.

**Revendications**

1. Procédé de traitement de matières en lit fluidisé avec extraction de produits solides, dans une installation comportant une chambre principale de traitement (1), alimentée en matière à traiter, munie à sa base de moyens (12) de formation, par circulation ascendante d'un gaz, d'un lit fluidisé (4) dans lequel on réalise une réaction de traitement avec production de particules solides susceptibles de s'agglomérer à partir d'une température de collage, et reliée par sa partie supérieure à un séparateur gaz-solides (2) de récupération des particules fines entraînées avec les gaz et comprenant au moins une partie agglomérable, le séparateur (2), comprenant une sortie (21) des gaz épurés et une sortie (22) des solides, reliée à la chambre principale de traitement (1) par un circuiz (3) de recyclage dans le lit fluidisé (4) des particules récupérées, lesdites particules fines récupérées à la sortie du séparateur (2) étant introduites dans une zone localisée (53) ménagée sur le trajet du circuit de recyclage (3) et dans laquelle on produit une haute température, supérieure à la température de collage, permettant l'extraction des particules agglomérables, et les particules incomplètement traitées étant seules recyclées dans le lit fluidisé, caractérisé par le fait que l'on règle la température dans la chambre principale de traitement (1) à un niveau inférieur à la température de collage des produits.

2. Procédé de traitement de matières selon la revendication 1, caractérisé par le fait que l'on règle les conditions de fonctionnement et de circulation des gaz dans la chambre principale de traitement (1) pour y obtenir un régime de lit fluidisé circulant dans lesquels les produits solides formés se séparent en deux parties, une partie fine entraînée avec les gaz et susceptible d'être extraite après agglomération dans la zone à haute température et une partie grossière restant dans le lit fluidisé et évacuée par gravité à la base de la chambre principale.

3. Procédé selon l'une des revendications 1 et 2, de traitement d'une matière combustible dans lequel celle-ci est soumise, dans la chambre de traitement (1), à une combustion et/ou gazéification au moins partielle avec production de cendres dont au moins la partie la plus fine est entraînée avec les fumées avec des particules fines incomplètement brûlées, caractérisé par le fait que l'on règle la température dans le lit fluidisé (4) pour une combustion et/ou gazéification en cendres sèches et que l'on réalise une extraction sélective des cendres par agglomération dans une zone localisée à haute température (53) ménagée sur le trajet du circuit de recyclage (3).

4. Procédé de traitement selon l'une des revendications précédentes, caractérisé par le fait que la zone (53) d'agglomération à haute température est réalisée dans un lit fluidisé (43) ménagé à l'intérieur d'une chambre secondaire (5) interposée sur le trajet du circuit de recyclage (3) et dans laquelle on réalise un complément de traitement de la matière.

### Claims

1. A process for treating materials in a fluidized bed with removal of solid products, in a plant comprising a main treatment chamber (1) supplied with material to be treated and having at its base means (12) for forming by the upward circulation of a gas a fluidized bed (4) in which a treatment reaction is performed with the introduction of solid particles capable of agglomeration from a sticking temperature and which is connected via its upper part to a gas/solids separator (2) for recovering the fine particles entrained with the gases and comprising at least one part which can be agglomerated, the separator (2) incorporating an outlet (21) for the purified gases and an outlet (22) for the solids, which is connected to the main treatment chamber (1) via a circuit (3) for recycling the recovered particles into the fluidized bed (4), the fine particles recovered at the outlet of the separator (2) being introduced into a localized zone (53) which is arranged in the path of the recycling circuit (3) and in which a high temperature is produced, higher than the sticking temperature, enabling the particles capable of agglomeration to be removed, only those particles which have been incompletely treated being recycled to the fluidized bed, characterized in that the temperature in the main treatment chamber (1) is regulated to a level lower than the sticking temperature of the products.

2. A process for treating materials according to Claim 1, characterized in that the conditions of operation and circulation of the gases in the main treatment chamber (1) are regulated to obtain therein circulating fluidized bed conditions in which the solid particles formed are separated into two parts, a fine part entrained with the gases and capable of being removed after agglomeration in the high-temperature zone, and a coarse part remaining in the fluidized bed and removed by gravity at the base of the main chamber.

3. A process according to one of Claims 1 and 2, for treating a combustible material, wherein the latter is subjected in the treatment chamber (1) to at least partial combustion and/or gasification, with production of ash, at least the finest part of which is entrained with the fumes with the incompletely burnt fine particles, characterized in that the temperature in the fluidized bed (4) for combustion and/or gasification to dry ash is regulated and selective removal of ash is performed by agglomeration in a localized high-temperature zone (53) arranged in the path of the recycling circuit (3).

4. A treatment process according to one of the preceding Claims, characterized in that the high-temperature agglomeration zone (53) is produced in a fluidized bed (43) arranged inside a secondary chamber (5) which is interposed in the path of the recycling circuit (3) and in which additional treatment of the material is performed.

### Patentansprüche

1. Verfahren zur Behandlung von Material im Wirbelbett mit Extraktion von festen Produkten in einer Vorrichtung mit einer Hauptbehandlungskammer (1), in die das zu behandelnde Material eingeführt wird und die am Boden Vorrichtungen (12) zur Herstellung, mittels aufsteigender Zirkulation eines Gases, eines Wirbelbetts (4) aufweist, in dem eine Behandlungsreaktion unter Herstellung von festen, sich ab einer Verklebungstemperatur zusammenballbaren Teilchen durchgeführt wird, und die über ihr oberes Ende mit einer Gas-Feststoff-Trennvorrichtung (2) zur Wiedergewinnung der mit dem Gas mitgenommenen, zum Teil zusammenballbaren, feinen Teilchen verbunden ist, wobei die Trennvorrichtung (2) einen Auslass (21) für die gereinigten Gase und einen Auslass (23) für die Feststoffe aufweist, der mit der Hauptbehandlungskammer (1) über einen Rückführkreis (3) der wiedergewonnenen Teilchen in das Wirbelbett (4) verbunden ist, wobei die am Ausgang der Trennvorrichtung (2) wiedergewonnenen feinen Teilchen in eine Zone (53) eingeführt werden, die auf dem Weg des Rückführkreises (3) angeordnet ist und in der eine hohe, über der Verklebungstemperatur liegende Temperatur eingestellt wird, wodurch die zusammenballbaren Teilchen extrahiert werden können und die unvollständig behandelten Teilchen allein in das Wirbelbett zurückgeführt werden, gekennzeichnet durch Einstellen der Temperatur in der Hauptbehandlungskammer (1) auf einen Wert unter der Verklebungstemperatur der Produkte.

2. Verfahren zur Behandlung von Material nach Anspruch 1, dadurch gekennzeichnet, dass die Bedingungen für den Betrieb und die Zirkulation der Gase in der Hauptbehandlungskammer (1) so eingestellt werden, dass ein irkulieren Wirbelbetts entsteht, in dem die gebildeten festen Produkte in zwei Teile getrennt werden, einen feinen, mit den Gasen mitgerissenen Teil, der nach Zusammenballung in der Hochtemperaturzone extrahiert werden kann, und einen gröberen Teil, der im Wirbelbett bleibt und durch Absinken am Boden der Hauptkammer abgelassen wird.

3. Verfahren nach Anspruch 1 oder 2 zur Behandlung eines brennbaren Materials, in dem das brennbare Material in der Behandlungskammer (1) zumindest teilweise unter Bildung von Asche verbrannt und/oder vergast wird, wovon zumindest der feinste Teil mit den Gasen und den unvollständig verbrannten feinen Teilchen mitgerissen wird, dadurch gekennzeichnet, dass die Temperatur im Wirbelbett (4) so eingestellt wird, dass eine Verbrennung und/oder Vergasung in Trockenasche erfolgt und eine selektive Extraktion der Asche durch Zusammenballen in der auf dem Weg des Rückführkreises (3) angeordneten Hochtemperaturzone (53) durchgeführt wird.

4. Verfahren nach einem der vorstehenden Ansprüche, dadurch gekennzeichnet, dass die Hochtemperaturzone (53) zur Zusammenballung in einem Wirbelbett (43) im Inneren einer Nebenkammer (5) ist, die sich auf dem Weg des Rückführkreises (3) befindet und in der das Material nachbehandelt wird.